# EUROPEAN PATENT APPLICATION

(11) **EP 1 071 261 A1**
(43) Date of publication of application: **24.01.2001**
(21) Application number: 00900145.4
(22) Date of filing: 07.01.2000
(51) Int. Cl.: H04L 29/14, H04M 11/00, G06F 13/00, G06F 11/22

(54) **INFORMATION SERVICE TERMINAL COMMUNICATION ADAPTER**

(30) Priority: 11.01.1999 JP 445899
(71) Applicant: Anritsu Corporation, Minato-ku Tokyo 106-8570 (JP)
(72) Inventor: TAKADA, Shinji, Atsugi-shi, Kanagawa 243-0035 (JP)
(74) Representative: Sajda, Wolf E., Dipl.-Phys.
(86) International application number: JP0000044
(87) International publication number: WO0042757

(57) **Abstract**

An information service terminal communication adapter controls a connection state between an information service terminal and a communication line by means of a connection state control section. A diagnostic signal transmitting section outputs to the information service terminal a diagnostic signal for judging whether or not a predetermined program normally runs. A response discriminating section receives a response signal from the information service terminal corresponding to the diagnostic signal transmitted by the diagnostic signal transmitting section, and discriminates whether or not the predetermined program normally runs. A terminal restart section outputs a signal for restarting the predetermined program to the information service terminal in the case where the response discriminating section discriminates that the predetermined program does not run normally. In this manner, a communication adapter side can detect speedily that a program for information processing stops on the information service terminal side, and automatically recovers the program from such stoppage.

## Description

### Technical Field

The present invention relates to a communication adapter for controlling a connection state between an information service terminal and a communication line and, more particular, to an information service communication adapter with a function for preventing an occurrence of an unpredicted event that information processing cannot be performed for a long period of time due to program stoppage in the information service terminal.

An information service terminal according to the present invention includes, for example, an information service terminal installed on the street or the like in order to provide an interactive information processing service to an unspecified user via a predetermined network by CPU executing predetermined programs containing an operation system program and at least one application program which have been stored in a memory according to the user's operation.

### Background Art

As is well known, the Internet is utilized as means for providing an interactive information processing service for acquiring and transmitting various information, for example.

In order for individuals to utilize the Internet, in general, it is required to connect an individually-owned computer to a communication line via a communication adapter such as modem or terminal adapter, and a person who does not own a computer cannot utilize the Internet.

In addition, in the case where an individual utilizes the Internet at a remote site or the like, there is an inconvenience that the individual must always have a computer and a communication adapter.

In order to solve this inconvenience, it is required to realize a novel information service terminal so that even a person who does not have or own a computer can utilize the Internet easily.

Accordingly, in recent years, like a public telephone set, it has been proposed that a public information service terminal is installed as an information processing terminal connectable to the Internet at storefront or at the inside of various shops which are present at terminal stations of various traffic systems, within airport, or on the street (refer to "Multimedia Information KIOSK Platform "Anritsu Technical No. 77, Apr. 1999, pp 16 to 23, for example).

This public information service terminal comprises, for example, a control circuit consisting of a memory such as CPU, ROM, RAM, and external storage unit; an output unit such as display unit or printer; and an IC card reader/writer unit for collecting charge or the like.

The public information service terminal is connected to a communication line via a communication adapter, and is controlled. In addition, like a personal computer, an application program for the Internet connection is executed on a program of a basic operation system (OS), thereby making it possible to provide to an unspecified user interactive information processing services including information service such as the Internet.

In such public information service utilized by an unspecified user, it is required to ensure that even a person who is not familiar with keyboard or mouse operation employed in a personal computer can perform the Internet connection request and operation.

In addition, in the public information service terminal of such type, it is required to ensure that a user cannot change operating conditions inside the terminal, make file operation, or make program initiation operation.

Therefore, in the aforementioned public information service terminal, there is provided only operating means having its limited function (for example, touch type switch panel or the like).

In the meantime, in general, in an information processing terminal for executing a program stored in a memory, thereby performing information processing, a program of an operation system (OS) or an application program may stop for some reason.

However, even in the case where the program thus stops for some reason, in the public service terminal comprising only operating means having its limited function as described above, there is provided a configuration in which the user cannot restore such inactive program.

Moreover, once program stoppage occurs in such public information service terminal, there is a danger that serious damage occurs with users or installers.

For example, while a program stops, a public information service terminal is unavailable, and thus, there occurs an inconvenient event that profits on the installer side of the terminal decreases.

In addition, in the case where a transaction system for collecting service charge via an IC card inserted by a user during utilization of the terminal is employed, if a program stops during utilization of the terminal, there occurs an inconvenient event that processing for collecting the service charge cannot be executed, and further, the IC card cannot be returned to the user.

In addition, in the case where an enterprise advertisement program is periodically displayed on the screen of a display unit of the terminal, thereby obtaining profits, if a program stops during utilization of the terminal, the advertisement program cannot be displayed as is scheduled. Thus, there occurs an inconvenient event that the advertiser or the installer of the terminal is damaged.

In order to prevent these inconvenient events from occurring, there is proposed that a person involved in supervision and maintenance of the information processing terminal is arranged to reside by each installation site of the terminal or frequently patrol around such each installation site. In this manner, in the case where a program stops during utilization of the terminal, the inactive program is manually restored.

Hence, such manual method is problematic in view of cost efficiency. When a number of terminals of such type are installed, quick response to such stoppage is impossible. Thus, there is a problem that the user unavoidably experiences an occurrence of such unpredicted event that information processing cannot be performed for a long time due to such program stoppage.

### Disclosure of Invention

It is an object of the present invention to provide an information service terminal communication adapter with a function for preventing an occurrence of an unpredicted event that information processing cannot be performed for a long time due to program stoppage by speedily detecting that an information processing program stops and automatically restoring it in the aforementioned information service terminal.

According to the present invention, there is provided an information service terminal communication adapter comprising: connection state control means for, by a CPU, executing predetermined programs including an operation system program and at least one application program stored in a memory according to the user's operation, thereby controlling a connection state between an information service terminal for providing an interactive information processing service to the user via a predetermined network and a communication line; diagnostic signal transmitting means for outputting a diagnostic signal for judging whether or not the predetermined program normally runs to the information service terminal; response discriminating means for discriminating whether or not the predetermined program normally runs in receipt of a response signal from the information service terminal corresponding to the diagnostic signal transmitted by the diagnostic signal transmitting means; and terminal restart means for, in the case where it is judged that the predetermined program does not run normally by the response discriminating means, outputting a signal for restarting the predetermined program to the information service terminal.

### Brief Description of Drawings

FIG. 1 is a block diagram showing an entire configuration of one embodiment to which the present application is applied;
FIG. 2 is a block diagram showing a configuration of a communication adapter according to the embodiment;
FIG. 3 is a block diagram showing a configuration of a public information service terminal according to the embodiment;
FIG. 4 is a flowchart explaining a processing steps on the communication adapter side according to the same embodiment; and
FIG. 5 is a flowchart explaining a processing steps on the public information service terminal side according to the embodiment.

### Best Mode for Carrying Out the Invention

First, an outline of the present invention will be described here.

In order to achieve the foregoing object, according to a first aspect of the present invention, there is provided a communication adapter for connecting between an information processing terminal for, by a CPU, executing a program stored in a memory, thereby performing information processing and a communication line, the communication adapter comprising: diagnostic signal transmitting means for outputting a predetermined diagnostic signal to the information processing terminal side; response discriminating means for discriminating presence or absence of a response of the information processing terminal to the diagnostic signal, and type of the response; and CPU restart means for, when the response discriminating means discriminates that there is no response from the information processing terminal, or that there is a specific response from the information processing terminal, restarting a CPU of the information processing terminal.

In addition, a communication adapter according to a second aspect of the present invention comprises a notifying means for notifying to a predetermined center via the communication line the response result of the information processing terminal to the diagnostic signal in the communication adapter according to the first aspect.

Further, according to a third aspect of the present invention, there is provided a public information service terminal connected to a communication line via a communication adapter, wherein CPU executes a program stored in a memory, thereby providing information service processing and providing various information to a user, the public information service terminal comprising: execution discriminating means for discriminating whether an application program for information service processing is normally executed; program restart means for, when the application program is not executed normally by the execution discriminating means, restarting the application program; and response signal output means for, when the application program by the program restart means is unsuccessfully restarted, outputting a specific response signal to the communication adapter, so that the CPU can be restarted from the communication adapter side.

Now, based on the foregoing outline, an embodiment of the present invention will be described with reference to the accompanying drawings.

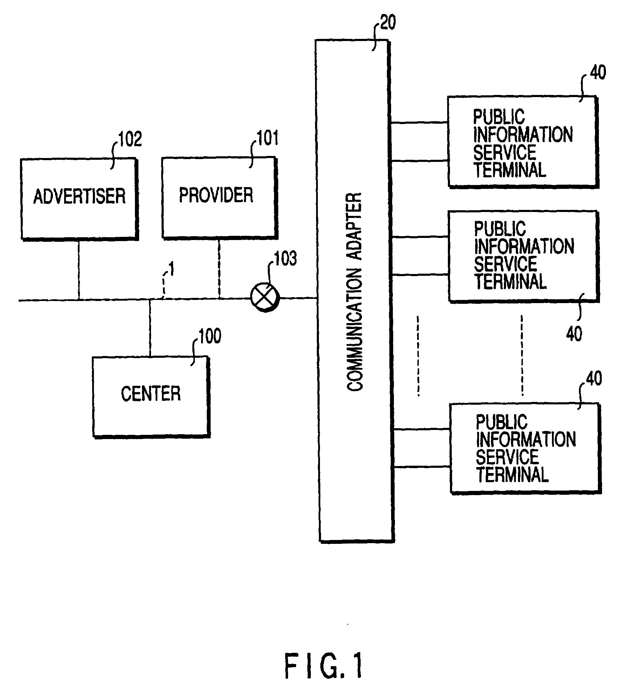

FIG. 1 to FIG. 3 show a communication adapter 20 and a public information service terminal 40 according to one embodiment of the present invention.

This communication adapter 20, as is shown as a distributed system configuration in FIG. 1, is a so called dialup router type adapter that connects a plurality of public information service terminals 40, 40, ··· 40 installed in a relatively small area are connected via LAN; and this LAN is connected to a communication line 1 (analog line, ISDN public line, digital leased line or the like).

To this communication line 1, there are connected via a switched network 103, a computer of a predetermined center 100 for managing a public information service terminal system; a computer 101 of a provider as the Internet connection agent; and a computer 102 of an advertiser and the like.

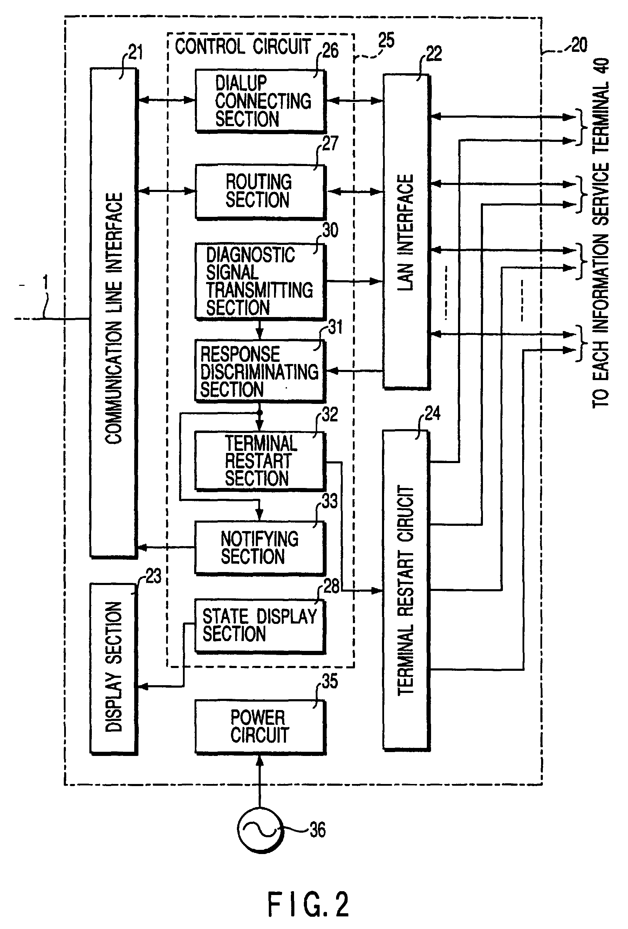

This communication adapter 20, as shown in FIG. 2, comprises a communication line interface 21, a LAN interface 22, a display 23, a terminal restart circuit 24, a control circuit 25, and a power circuit 35.

Here, the communication line interface 21 is an interface capable of transmitting a packet bidirectionally between the communication line 1 and the control circuit 25.

For example, in the case where the communication line 1 is an ISDN public line, the communication line interface 21 performs processing such as control of the layers 1 and 2 or B channel switching, transmits a packet from an ISDN line network to the control circuit 25, and outputs the packet from the control circuit 25 to an ISDN public line.

In addition, the LAN interface 22 is an interface for outputting the packet output from each public information service terminal 40 onto a LAN and to the control circuit, and transmitting the packet from the control circuit 25 onto the LAN.

In this LAN interface 22, there is employed any of the standards such as Ethernet 10BASE5, 10BASE2, 10BASE-T, and 100BASE-TX, for example.

The LAN protocol may be a token ring, FDDI or the like other than Ethernet.

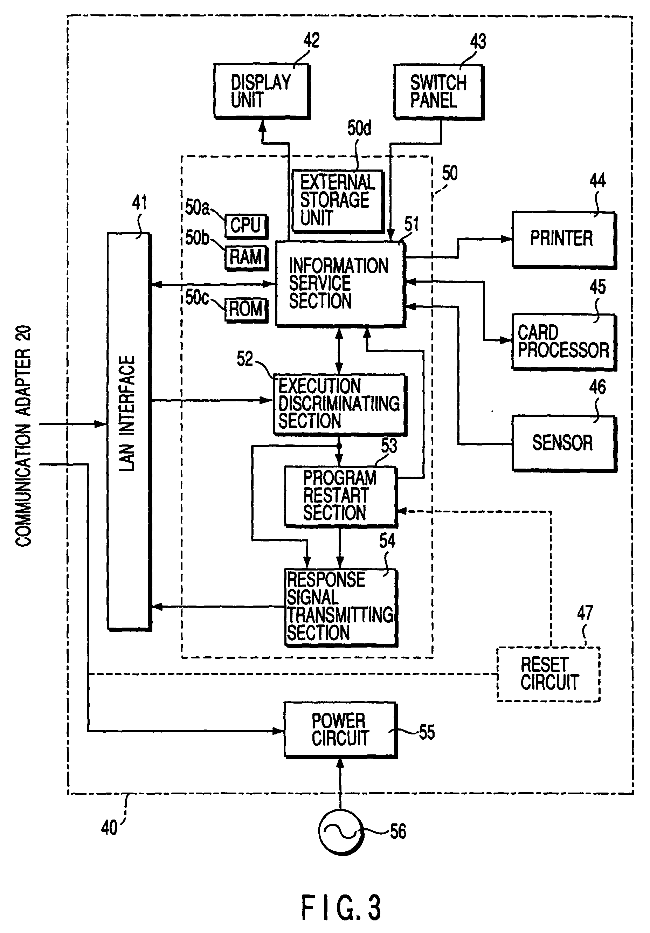

In addition, the terminal restart circuit 24 is connected via cable to a restart terminal of power circuit 55 (refer to FIG. 3) of a plurality of public information service terminals 40 connected via the LAN interface 22, and is connected to an input terminal of a reset circuit 47 (refer to FIG. 3) of each public information service terminal 40.

This terminal restart circuit 24 has a function for connecting a start terminal of the power circuit 55 (refer to FIG. 3) of each public information service terminal 40 to an earth line for a predetermined period of time, for example via a relay circuit or the like, followed by disconnecting the terminal from the earth line, whereby power supply to the public information service terminal 40 is temporarily stopped, and then, is restarted.

In addition, this terminal restart circuit 24 has another function for temporarily terminating and restarting an application program discriminated not to be normally executed as described later for a program restart section 53 (refer to FIG. 3) via the reset circuit 47 (refer to FIG. 3) of each public information service terminal 40, thereby checking whether the restart is successful or not.

An output line from this terminal restart circuit 24 is bundled with an input/output line from the LAN interface 22, and these lines are connected via cable to each public information service terminal 40.

Hence, in the case where four public information service terminals 40 are present, four of the eight cables can be assigned to the input/output line from the LAN interface 22 with limitation to a case in which the 10BASE-T or 10BASE-TX standards of the aforementioned Ethernet is employed. In addition, the remaining four cables can be assigned to the output line from the terminal restart circuit 24. Thus, the number of cables for the input/output lines included in a distributed system configuration is not increased.

Although the control circuit 25 is composed of a microcomputer consisting of CPU, RAM, ROM (not shown) and the like, the circuit is functionally shown as a program stored in the ROM in FIG. 2.

That is, this control circuit 25 comprises a dialup connecting section 26, a routing section 27, and a state display section 28, as a center section of the communication adapter 20.

First, the dialup connecting section 26 has a function for, when it receives a packet containing connection request information given to a specific destination (a center 100 or a provider 101 as a predetermined the Internet connection agent) of the packets output from the public information service terminal 40 in order to form a dialup router, performing call processing for the specific destination, thereby connecting a communication line 1 to a computer of the specific destination which was requested for connection (connection state control means).

The routing section 27 has a function for selectively outputting to the LAN interface 22 packet for the public information service terminal 40 of the packets sent from a dialup connected computer, and outputting to the communication line interface 21 a packet for the specific destination of the packets output from the public information service terminal 40.

In addition, the state display section 28 has a function for displaying on the display 23 whether or not a packet is output on a LAN, or whether or not the communication line 1 is connected with the LAN.

In addition, at this control circuit 25, in order to prevent the information service processing of each public information service terminal 40 from stopping over a long period of time, there are provided a diagnostic signal transmitting section 30, a response discriminating section 31, a terminal restart section 32, and a notifying section 33.

Here, the diagnostic signal transmitting section 30 outputs a predetermined diagnostic signal for judging whether or not a predetermined program incorporated in a memory in each public information service terminal 40 normally runs as described later to each public information service terminal 40 every predetermined period of time (for example, 50 ms to 1 minute).

This predetermined diagnostic signal outputs a diagnostic message including time stamp information periodically to each public information service terminal 40 in accordance with a signal format based on the TCP/IP protocols, for example.

The response discriminating section 31 discriminates the presence or absence of the response from each public information service terminal 40 to a predetermined diagnostic signal from the diagnostic signal transmitting section 30 and type of the response signal.

The terminal restart section 32 generates a terminal restart command in the case where there is no response signal from each public information service terminal 40 to a predetermined diagnostic signal from the diagnostic signal transmitting section 30 and in the case where a specific response signal (a third response signal described later) is acquired; and drives the terminal restart circuit 24 to restart the public information service terminal 40 or directly restart an inactive program itself.

The notifying section 33 notifies from the communication line interface 21 to a predetermined center 100 via the communication line 1 the response result from the public information service terminal 40 for a predetermined diagnostic signal from the diagnostic signal transmitting section 30.

The power circuit 35 is configured to be connected to a commercially available power source 36 independent of a commercially available power source 56 connected to the power circuit 55 of the public information service terminal 40 described later, thereby supplying a power source to each circuit in the communication adapter 20.

In this case, there is no need that the commercially available power source 36 and the commercially available power source 56 are always independent from each other. Simply, the power circuit 35 and the power circuit 55 may be a direct current power circuit of another system.

On the other hand, each public information service terminal 40, as shown in FIG. 3, comprises an LAN interface 41 connected to the LAN interface 22 of the communication adapter 20; a display unit 42 for displaying information and the like; a touch type switch panel 43 provided on the display face of this display unit 42; a printer 44 for printing information; a card processor 45 for collecting charge from a user; a sensor 46 for detecting the user's access by red infrared rays, for example; a control circuit 50, and a power circuit 55.

Here, the control circuit 50 includes a CPU 50a, a RAM 50b, a ROM 50c, and an external storage unit 50d such as hard disk. The CPU 50 is the center section of the public information service terminal 40 by executing predetermined programs including an operation system program stored in a memory including external storage unit such as the ROM 50d or a hard disk; and at least one application program by the CPU 50a, thereby providing charged information service processing or the like including the Internet.

The contents of the information service processing using this control circuit 50 can be changed according to an installation site of the public information service terminal 40 by changing an application program for information service processing that are executed on an operating system program (OS) stored in a memory such as the ROM 50a or the external storage unit 50d.

FIG. 3 functionally shows a program which the CPU 50a of the control circuit 50 executes.

That is, this control circuit 50 includes an information service section 51, an execution discriminating section 52, a program restart section 53, and a response signal transmitting section 54.

First, the information service section 51 has a function for executing an application program for information service processing on an operation system program (OS), thereby providing information service such as the Internet to a user.

In addition, the execution discriminating section 52, the program restart section 53, and the response signal transmitting section 54 have a function for supervising and restoring the operation system program and the application program for information service to be provided.

Here, the information service section 51 displays a predetermined enterprise advertisement program or the like on the screen of the display unit 42 when a user is not detected by a sensor 46. Alternatively, when the user is detected, the information service section prompts the user to insert a card on the screen of the display unit 42 (voice if voice output means is provided).

When the user inserts a card, the information service section 51 discriminates whether or not the card is available according to the read contents of the card information by the card processor 45. Then, when the card is available, a menu key for information services including the Internet which can be provided is displayed on the screen of the display unit 42 at a position corresponding to each switch of the switch panel 43, thereby causing the user to select type of available information service.

When the user select a utilization of the Internet, for example, by a menu key accordingly, the information service section 51 executes an application program for the Internet connection, whereby a request for connection to a predetermined the Internet connection agent is output to the communication adapter 20. After connection to the predetermined the Internet has been made, a home page at a desired site is displayed on the screen of the display unit 42.

The information service section 51 perform processing for collecting charge to the card inserted into the card processor 45 when the Internet utilization is started or in progress.

This charge collecting process is executed by subtracting and updating the frequency or amount of money recorded in the card according to the charge in the case where the card is a prepaid card (either magnetic card or IC card).

This information service does not always need to collect the charge from the user. In the case where an application style is employed such that profits are gained through enterprise advertisement program display or the like, the information service can be provided without charge.

In addition, this information service may comprise a charge information service or a free information service.

On the other hand, when the aforementioned predetermined diagnostic signal is input from the communication adapter 20, even if the CPU 50a executes another processing, the execution discriminating section 52 discriminates whether or not an operation system program (OS) and an application program for information service to be provided are normally executed.

This discrimination is done via task communication with the application program or via a supervisory program of the operation system program (OS)s.

In addition, when the execution discriminating section 52 discriminates that the operation system program (OS) and the application program for information service to be provided are not executed normally, the program restart section 53 notifies the fact to the communication adapter 20 side; temporarily terminals and restarts the operation system program (OS) and the application program for information service to be provided; and checks whether the restart is successful or not.

When the execution discriminating section 52 discriminates that the operation system program (OS) and the application program for information service to be provided are normally executed, the response signal transmitting section 54 outputs a first response signal to the communication adapter 20 in accordance with a predetermined format.

In addition, when the execution discriminating section 52 discriminates that the operation system program (OS) and the application program for information service to be provided are not executed normally, and when the programs have been successfully restarted by the program restart section 53, the response signal transmitting section 54 outputs a second response signal to the communication adapter 20 in accordance with a format different from the first response signal.

Further, when the execution discriminating section 52 discriminates that the operation system (OS) program and the application program for information service to be provided are not executed normally, and when the program restart section 53 fails to restart these programs, the response signal transmitting section 54 outputs a third response signal (a specific response signal) to the communication adapter 20 in accordance with a format different from the first and second response signals.

Here, the first, second, and third response signals return a response message containing time stamp information to the communication adapter 20 side periodically in accordance with a signal format based on the TCP/IP protocols.

The power circuit 55 is adopted to supply a power to each of the circuits in the public information service terminal 40. As described previously, this circuit is configured to be connected to the commercially available power source 56 independent of the power circuit 35 of the communication adapter 20.

This power circuit 55 stops power supply when its active terminal is grounded, for example, and starts power supply when it is released.

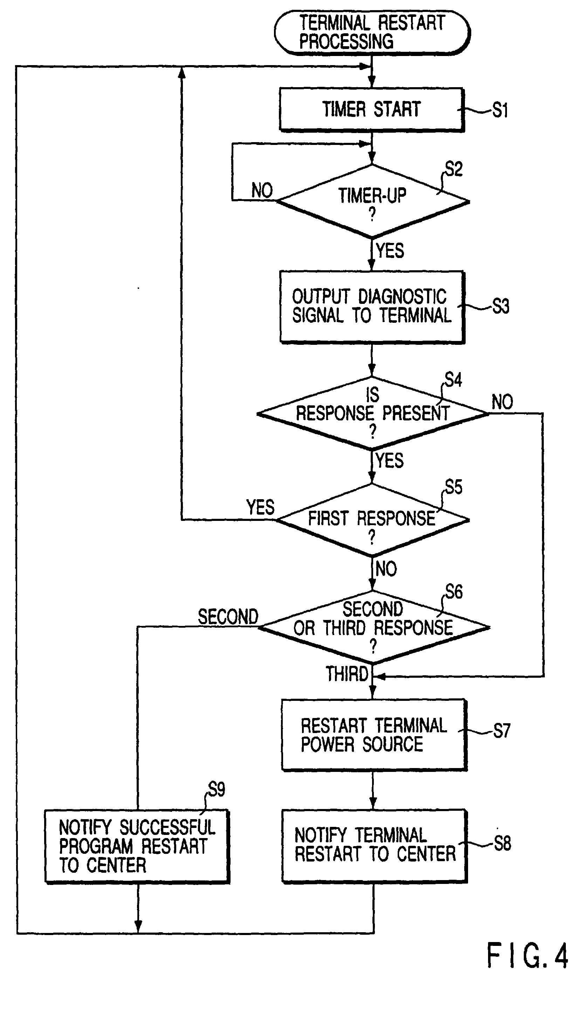

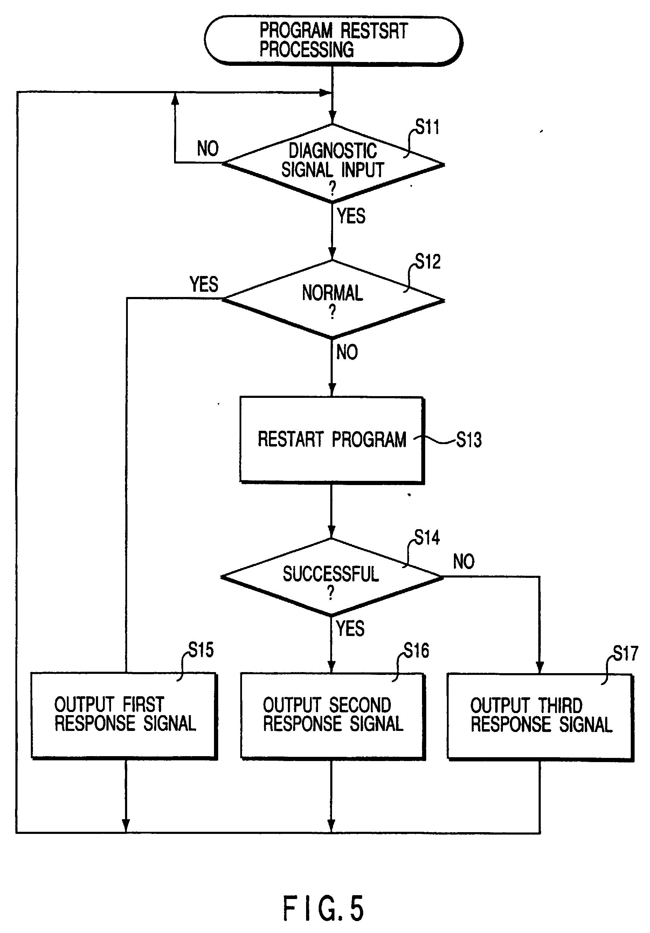

FIG. 4 and FIG. 5 are flowcharts showing the terminal restart processing steps on the communication adapter 20 side; and the program restart processing steps on the public information service terminal 40 side, respectively.

Hereinafter, operations of the communication adapter 20 and the public information service terminal 40 will be described with reference to these flowcharts.

First, as shown in the processing steps S1 to S6 of FIG. 4, the communication adapter 20 outputs to the public information service terminal 40 a predetermined diagnostic signal for judging whether or not a predetermined program incorporated in a memory in the public information service terminal 40 normally runs every time a predetermined period of time (for example, 500 ms to 1 minute) has elapsed (diagnostic signal transmitting means). Then, the communication adapter discriminates the presence or absence of a response from the public information service terminal 40 to the output and type of the response signal as any one of the aforementioned first, second, and third response signals (response discriminating means).

In the case where a response from the public information service terminal 40 is absent, and in the case where a third response signal is received, the communication adapter 20, as shown in the processing step S7, restarts the power circuit 55 of the terminal 4 to activate the terminal 40 from its initial state, or temporarily terminals and restarts the operation system program (OS) and the application program for information service to be provided, which has been discriminated not to be normally executed for the program restart section 53 via the reset circuit 47 of the terminal 40 (terminal restart means).

Next, the communication adapter 20 notifies the restart of the terminal 40 to a center 100 by dialup as shown in the processing step S8. As shown in the processing step S9, in the case where a second response signal is received, the communication adapter 20 notifies to the center 100 by dialup that the operation system program (OS) and the application program for information service to be provided, which have been discriminated not to be normally executed on the terminal 40 side, is successfully restarted (notifying means).

On the other hand, as shown in the processing steps S11 and S12 of FIG. 5, when a diagnostic signal for judging whether or not a predetermined program incorporated in a memory in the public information service terminal 40 normally runs is input from the communication adapter 20, each public information service terminal 40 discriminates whether nor not the operation system program (OS) and the application program for information service to be provided are normally executed (execution discriminating means).

In the processing step S12, when it is discriminated that the operation system program (OS) and the application program to be provided are not executed normally, each public information service terminal 40 temporarily terminals and restarts the operation system program (OS) and the application program to be provided, and checks whether this restart is successful or not (program restart means).

In addition, in the processing step S12, when it is discriminated that the operation system program (OS) and the application program to be provided are normally executed, each public information service terminal 40 outputs the aforementioned first response signal to the communication adapter 20 as shown in the processing step S15.

Further, in the processing step S12, when it is discriminated that the operation system program (OS) and the application program to be provided are not executed normally, and in the processing step S14, when these programs are successfully restarted, each public information service terminal 40 outputs a second response signal different from the first response signal to the communication adapter as shown in the processing step S16.

Furthermore, in the processing step S12, when it is discriminated that the operation system program (OS) and the application program to be provided are not executed normally, and in the processing step S14, when these programs are unsuccessfully restarted, each public information service terminal 40 outputs a third response signal different from the first and second response signals to the communication adapter as shown in the processing step S17 (response signal output means).

The center 100 side grasps the state of each public information service terminal 40 based on information notified from the communication adapter 20, and instructs the terminal 40 with high restart frequency to perform required maintenance or the like.

In the meantime, a program for activating the communication adapter 20 is an exclusive program whose reliability is significantly high.

In contrast, a program for activating each public information service terminal 40 uses a general-purpose operation system program (OS) and an application program, and its reliability is remarkably inferior to that of the communication adapter specific program.

That is, the general-purpose operation system program (OS) or application program is a huge program including some ten thousand steps or more. Even if an utmost effort has been made, its reliability is remarkably inferior to that of the communication adapter specific program.

Therefore, each public information service terminal 40 is diagnosed with the communication adapter 20 activated by a program with its significantly high reliability, whereby the reliability of the entire public information service system can be improved.

According to the present invention, with such configuration, diagnosis is effected as to whether or not the operation system program (OS) of each public information service terminal 40 and the application program to be provided are normally executed on the communication adapter 20 side. In the case where these programs stop, the operation system program (OS) and the application program to be provided can be restarted by restarting the programs on the terminal 40 side based on the restart command from the communication adapter.

In addition, according to the present invention, even if the operation system program (OS) and the application program to be provided on the pubic information service terminal 40 side; and a program for program restart processing stop simultaneously, disabling response to the diagnosis signal from the communication adapter 20, and even if the programs are unsuccessfully restarted, the public information service terminal 40 can be restarted from its initial state by restarting the terminal power source using the communication adapter 20.

Therefore, according to the present invention, an occurrence of an unpredicted event that the public information service terminal 40 becomes unavailable over a long period of time can be prevented, and thus, the user or installer is free of serious damage.

In the foregoing present embodiment, although there has been described a case in which a distributed system configuration is adopted such that a dialup router type communication adapter 20 is provided independent of a plurality of public information service terminals 40, there may be adopted a distributed system configuration such that the communication adapter 20 is incorporated in any one of the plurality of public information service terminals 40.

In addition, in the foregoing present embodiment, although there has been described a dialup router type communication adapter for controlling a connection between a plurality of public information service terminals 40 connected to LAN and a communication line 1, the present invention is similarly applicable to a terminal adapter type or modem type communication adapter.

Further, one terminal targeted to be connected to the communication adapter will suffice.

Furthermore, on the communication adapter 20 side, diagnosis is effected as to whether the operation system (OS) program of each publication information service terminal 40 and the application program to be provided are normally executed. In the case where these program stop, the communication adapter 20 notifies the fact to the center 100 by dialup, whereby the operation system program (OS) and the application program to be provided can be restarted by restarting the programs on the terminal 40 side based on a restart command from the communication adapter 20, or alternatively, a restart command from the center 100 side.

As has been described above, the communication adapter of the present invention outputs to the information processing terminal side a predetermined diagnostic signal for judging whether or not a program of the information processing terminal normally runs; and discriminates the presence or absence of a response of the information processing terminal to this diagnostic signal and type of the response. In the case where a response is absent and in the case of a specific response is present, the communication adapter is configured so as to restart a CPU of the information processing terminal or restart an inactive program.

Therefore, even if a program stops on the information processing terminal side, the information processing terminal can be restarted, thereby making it possible to prevent the information processing terminal from being unavailable for a long period of time.

Further, in a communication adapter in which the response result of the information processing terminal to a diagnostic signal is notified to a predetermined center via a communication line, the state of the information processing terminal can be grasped on the center side, thereby making it possible to efficiently perform maintenance or the like.

In particular, in the case where an application style is employed such that profits are gained by periodically displaying an enterprise advertisement on the screen of the display unit, the response result of the information processing terminal to a diagnostic signal is notified from the communication adapter side to a predetermined center via a communication line by means of dialup without connecting between the advertiser and the terminal via an expensive leased line, whereby making it possible to quickly know an occurrence of a failure and a failure recover with the terminal.

In addition, in the case where an application style is employed such that enterprise advertisement (program) information or the like is displayed on the screen of the display unit of the terminal to be distributed every update, it is advantageous if an inexpensive circuit switching network is used between the advertiser and the terminal.

Hence, in such a case, even if a connection between the advertiser and the terminal is made via a leased line, an occurrence of a failure with the terminal can be notified and recovered speedily while network traffic is restricted.

In this case, even if a router is disposed in routing using IP or the like, a remarkable effect can be expected.

In addition, a startup time of an advertisement program of the terminal, a stoppage time of the advertisement program, a restart time of the advertisement program, and the advertisement program display count or the like can be accurately grasped on the center side. Thus, on the predetermined center side, a proper charge can be invoiced to the advertiser in consideration of the stoppage time of the advertisement program.

Further, even if a lock state occurs when an operating system program (OS) is used at the terminal, restarting can be automatically performed through supervision from the communication adapter side.

Therefore, according to such system, even when there is employed a general-purpose operation system program which is an advanced operating system such as multimedia, a failure to display the advertisement program as is scheduled is minimized, and damage to the advertise or the terminal installer can be minimized.

In addition, in a public information service terminal of the present invention, when a diagnostic signal is received from the communication adapter side, it is discriminated whether or not an application program for information service processing is normally executed. If the application program is not executed normally, the program is restarted. When this restarting has failed, the specific response signal is output to the communication adapter side. Moreover, the public information service terminal CPU can be restarted from the communication adapter.

Therefore, when only an application program for information service processing stops, an attempt is made to restart that program on the terminal main body side. If the program cannot still be restarted, a specific response signal is output. Thus, the communication adapter side can easily grasp how the terminal application program is executed. the public information service terminal CPU is restarted from the communication adapter side, whereby the public information service terminal is free from being unavailable for a long period of time, and the user and installer is free from inconvenience or damage.

Therefore, according to the present invention as described above, there can be provided an information service terminal communication adapter for controlling a connection state between an information service terminal for providing an interactive information processing service to a user via a predetermined network and a communication line, the information service terminal communication adapter comprising a function for speedily detecting on the communication side that an information processing program has stopped on the information service terminal side, and enabling such inactive program to be automatically recovered, thereby preventing an occurrence of an unpredicted event that the information service terminal program stops, and information processing becomes unavailable for a long period of time.

## Claims

1. An information service terminal communication adapter comprising:
connection state control means for, by a CPU, executing predetermined programs including an operation system program and at least one application program stored in a memory according to a user operation, thereby controlling a connection state between an information service terminal for providing interactive information processing service to the user via a predetermined network and a communication line;
diagnostic signal transmitting means for periodically outputting to the information service terminal a diagnostic signal for judging whether or not the predetermined program normally runs;
response discriminating means for discriminating whether or not the predetermined program normally runs upon receipt of a response signal from the information service terminal corresponding to the diagnostic signal transmitted by the diagnostic signal transmitting means; and
terminal restart means for, in the case where the response discriminating means discriminates that the predetermined program does not run normally, outputting a signal for restarting the predetermined program to the information service terminal.

2. An information service terminal communication adapter according to claim 1, wherein the information service terminal communication adapter comprises notifying means for notifying the response discrimination result with the response discrimination means to a predetermined center for managing the information service terminal via the communication line.

3. An information service terminal communication adapter according to claim 1, wherein the connection state control means comprises means for, in the case where the response discriminating means discriminates that the predetermined program does not run normally, notifying the fact to a predetermined center for managing the information service terminal via the communication line by means of dialup; and outputting a signal for restarting the terminal based on a restart command from the predetermined center side received via the communication line.

4. An information service terminal communication adapter according to claim 1, wherein the connection state control means comprises means for distributing and displaying enterprise advertisement information or the like received via the communication line on a screen of a display unit of the information service terminal every update while the information service terminal is not utilized by the user.

5. An information service terminal communication adapter according to claim 4, wherein the connection state control means comprises notifying means for notifying the response discrimination result with the response discriminating means to a predetermined center for managing the information service terminal via the communication line while enterprise advertisement information or the like received via the communication line is displayed on the screen of the display unit of the information service terminal to be distributed every update.

6. An information service terminal communication adapter according to claim 5, wherein the contents notified by the notifying means includes a startup time of an advertisement program of the terminal; a stoppage time of the advertisement program; a restart time of the advertisement program, and the advertisement program display count or the like.

7. An information service terminal communication adapter according to claim 1, wherein the information service terminal comprises:
an execution discriminating section for, when a predetermined diagnostic signal is received from the information service terminal communication adapter side, discriminating whether or not the application program for information service processing is normally executed;
a program restart section for, when the execution discriminating section discriminates that the application program for information service processing is not executed normally, restarting the application program; and
a response signal transmitting section for, when an application program has been unsuccessfully restarted by the program restart section, outputting a specific response signal to the information service terminal communication adapter, so that a CPU of the information service terminal can be restarted from the information service terminal communication adapter side.

8. An information service terminal communication adapter according to claim 7, wherein the response signal transmitting section outputs a first response signal in accordance with a predetermined format to the information service terminal communication adapter when the execution discriminating section discriminates that the operation system program and application program for information service to be provided are normally executed.

9. An information service terminal communication adapter according to claim 8, wherein the response signal transmitting section outputs a second response signal in accordance with a format different from the first response signal to the information service terminal communication adapter when the execution discriminating section discriminates that the operation system program and application program for information service to be provided are not executed normally, and when the programs are successfully restarted by the program restart section.

10. An information service terminal communication adapter according to claim 9, wherein the response signal transmitting section outputs a third response signal in accordance with a format different from the first and second response signals to the information service terminal communication adapter when the execution discriminating section discriminates that the operation system program and application program for information service to be provided are not executed normally, and when the programs are unsuccessfully restarted by the program restart section.

11. An information service terminal communication adapter according to claim 7, wherein when the connection state control means receives a packet containing connection request information to a specific destination of the packets output from the information service terminal via a first interface, the control means performs call processing for the specific destination, thereby including a dialup connecting section having a function for connecting with a computer of the connection requested specific destination via a second interface and the communication line.

12. An information service terminal communication adapter according to claim 11, wherein when the connection state control means selectively outputs to the information service terminal via the first interface a packet to the information service terminal of the packets sent from a computer connected through dialup by the dialup connecting section via the communication line and the second interface, and receives via the first interface the packet to the specific destination of the packets output from the information service terminal, the control means includes a routing section having a function for outputting the packet to the specific destination to the specific destination via the second interface and the communication line.

13. An information service terminal communication adapter according to claim 12, wherein the information service terminal communication adapter further comprises a state display section having a function for displaying at least one of whether or not a packet is output via the first interface and whether or not the communication line and the first interface are connected with each other.

14. An information service terminal communication adapter according to claim 7, wherein the information service terminal communication adapter further comprises a power circuit configured to be connected with a commercially available power source independent of a commercially available power source connected to a power circuit of the information service terminal, the power circuit supplying power to each part in the information service terminal communication adapter.

15. An information service terminal communication adapter according to claim 14, wherein the terminal restart means comprises:
a terminal restart section for, in the case where a response signal from the information service terminal to a predetermined diagnostic signal from the diagnostic signal transmitting section is absent and in the case where a specific response signal is acquired, generating a terminal restart command; and
a terminal restart circuit driven by the terminal restart command of the terminal restart section to restart the information service terminal or directly restart a program itself which is inactive.

16. An information service terminal communication adapter according to claim 15, wherein the terminal restart circuit has a plurality of output terminals, the plurality of output terminals being connected via cable to each startup terminal of the power circuit of a plurality of information service terminals connected via the first interface and being connected to an input terminal of a reset circuit of each information service terminal.

17. An information service terminal communication adapter according to claim 16, wherein the terminal restart circuit has a function for connecting a startup terminal of a power circuit of the information service terminal to an earth line for a predetermined period of time, followed by disconnecting the startup terminal from the earth line, thereby temporarily stopping power supply to the information service terminal, and then, supplying the power again.

18. An information service terminal communication adapter according to claim 16, wherein the terminal restart circuit has a function for temporarily terminating and restarting an application program discriminated not to be normally executed to the program restart section via the reset circuit of the information service terminal, thereby checking whether the restarting is successful or not.

19. An information service terminal communication adapter according to claim 16, wherein an output line from the terminal restart circuit is bundled with an input/output line from the first interface, and is connected with the plurality of information service terminals via cable.

20. An information service terminal communication adapter according to claim 19, wherein in the case where the plurality of information service terminals are four in number a LAN interface as the first interface is used, in the case where a protocol of the LAN interface is Ethernet, four of the eight cables are assigned to the input/output line from the LAN interface, and the remaining four cables are assigned to the output line from the terminal restart circuit.

21. An information service terminal communication adapter according to claim 16, wherein the information service terminal communication adapter is incorporated in any one of the plurality of information service terminals.
